# EUROPEAN PATENT APPLICATION

(11) **EP 4 604 068 A1**
(43) Date of publication of application: **20.08.2025**
(21) Application number: 23876024.3
(22) Date of filing: 13.01.2023
(51) Int. Cl.: G06T 17/00

(54) **THREE-DIMENSIONAL RECONSTRUCTION METHOD AND APPARATUS, PRODUCT INFORMATION PROCESSING METHOD AND APPARATUS, AND DEVICE AND STORAGE MEDIUM**

(30) Priority: 14.10.2022 CN 202211257959
(71) Applicant: TAOBAO (CHINA) SOFTWARE CO.,LTD., Hangzhou, Zhejiang 311121 (CN)
(72) Inventor: YU, Hongyun, Hangzhou, Zhejiang 311121 (CN); CHEN, Zhiwen, Hangzhou, Zhejiang 311121 (CN); LYU, Chengfei, Hangzhou, Zhejiang 311121 (CN)
(74) Representative: Boult Wade Tennant LLP
(86) International application number: PCT/CN2023/071989
(87) International publication number: WO 2024/077809

(57) **Abstract**

This application provides a method, device, apparatus, and storage medium for three-dimensional reconstruction and product information processing. In embodiments of this application, a plurality of images of a target object are subjected to 3D reconstruction. Feature vectors of the images are extracted and concatenated. Based on concatenated feature vectors, pose control parameters and shape control parameters for model control are predicted. These parameters are then applied to perform masking operations on an initial 3D model of the target object to obtain a target 3D model of the target object. This 3D reconstruction approach significantly enhances precision and realism of 3D models, thereby effectively expanding the application scope and effectiveness of 3D model-based solutions. Specifically, in shopping scenarios, the 3D reconstructed model can be used to select and match products suitable for the target object, providing the conditions necessary to address current issues related to product returns and exchanges.

## Description

### CROSS -REFERENCE TO RELATED APPLICATION

This application claims priority to the Chinese patent application filed on October 14, 2022, with the application number 202211257959.4 and titled "Three-Dimensional Reconstruction and Product Information Processing Method, Device, Apparatus, and Storage Medium." The entire content of the aforementioned application is incorporated herein by reference.

### TECHNICAL FIELD

This application relates to the field of Internet technologies, and more particularly, to a method, device, apparatus, and storage medium for three-dimensional reconstruction and product information processing.

### BACKGROUND

With the development of Internet technologies and e-commerce, people can shop online without leaving their homes. However, for wearable products such as shoes, users are unable to try them on during online purchases. This often leads to situations where shoes or other wearable items need to be returned or exchanged after delivery due to improper fit or size. This not only significantly impacts the user's shopping experience but also increases the cost and reduces the efficiency of online shopping.

In response, some existing technologies propose solutions for estimating foot length and recommending suitable shoe sizes based on the estimated foot length. For example, methods include estimating foot length using key points in foot images or measuring foot length with the help of AR technology. Despite these solutions, users still find it difficult to determine whether shoes will pinch their feet or provide a comfortable fit based on their foot shape. In other words, existing solutions still fail to adequately address the challenges associated with selecting wearable products and do not effectively solve the problem of returns and exchanges.

### SUMMARY

Various aspects of this application provide three-dimensional reconstruction and product information processing method, device, apparatus, and storage medium. The invention enables high-precision 3D reconstruction of a target object, facilitating the selection and purchase of products that are compatible with the target object based on the reconstructed 3D model. This approach provides the necessary conditions to address and resolve existing issues related to product returns and exchanges.

An embodiment of the present disclosure provides a method for three-dimensional reconstruction, including: obtaining a plurality of frames of images containing a target object, and three-dimensional model description information corresponding to the target object; inputting the plurality of frames of images into a feature extraction network to extract features, to obtain feature vectors of the plurality of frames of images, and concatenating the feature vectors of the plurality of frames of images to generate a target concatenated feature vector; inputting the target concatenated feature vector into a parameter regression network, and predicting, based on the three-dimensional model description information, a plurality of control parameters for model control, wherein the plurality of control parameters includes pose control parameters and shape control parameters; and applying masking operations on an initial three-dimensional model of the target object based on the pose control parameters and the shape control parameters to obtain a target three-dimensional model of the target object, wherein the initial three-dimensional model is obtained based on the three-dimensional model description information.

An embodiment of the present disclosure further provides a three-dimensional reconstruction device, including: an image acquisition unit, configured to acquire a plurality of frames of images of a target object and three-dimensional model description information corresponding to the target object; a feature extraction unit, configured to input the plurality of frames of images into a feature extraction network to extract features and obtain feature vectors of the plurality of frames of images; a vector concatenation unit, configured to concatenate the feature vectors of the plurality of frames of images to obtain a target concatenated feature vector; a parameter regression unit, configured to input the target concatenated feature vector into a parameter regression network, and predict, based on a number of parameters, a plurality of control parameters for model control, wherein the plurality of control parameters include pose control parameters and shape control parameters; and a masking processing unit, configured to apply a masking operation on an initial three-dimensional model of the target object based on the pose control parameters and shape control parameters to generate a target three-dimensional model of the target object, wherein the initial three-dimensional model is obtained based on the three-dimensional model description information.

An embodiment of the present disclosure further provides a computing device, including: a memory, configured to store a computer program; and a processor, coupled to the memory, configured to execute the computer program to implement the steps of the three-dimensional reconstruction methods provided in embodiments of the present disclosure.

An embodiment of the present disclosure further provides a computer-readable storage medium storing a computer program, wherein, when the computer program is executed by a processor, it causes the processor to perform the steps of any one of the methods provided in embodiments of the present disclosure.

An embodiment of the present disclosure further provides a method for processing product information, including: obtaining a plurality of frames of images that containing a fitting subject, and three-dimensional model description information corresponding to the fitting subject; inputting the plurality of frames of images into a feature extraction network to extract features, to obtain feature vectors of the plurality of frames of images, and concatenating the feature vectors of the plurality of frames of images to generate a target concatenated feature vector; inputting the target concatenated feature vector into a parameter regression network, to predict, based on the three-dimensional model description information, a plurality of control parameters for model control, wherein the plurality of control parameters includes pose control parameters and shape control parameters; applying a masking operation to an initial three-dimensional model of the fitting subject based on the pose control parameters and shape control parameters to generate a target three-dimensional model of the fitting subject, wherein the initial three-dimensional model is generated based on the three-dimensional model description information; and providing target product information compatible with the fitting subject based on the target three-dimensional model.

In an embodiment of the present disclosure, a novel three-dimensional reconstruction network architecture is employed to perform 3D reconstruction for the target object. This 3D reconstruction network architecture includes: a feature extraction network, used to extract features from a plurality of frames of images containing the target object; a vector concatenation network, used to concatenate the feature vectors of the plurality of frames of images; a parameter regression network, used to predict model parameters based on the number of parameters specified in the three-dimensional model description information; a masking processing network, used to apply masking operations based on the predicted control parameters. This 3D reconstruction network architecture not only enables end-to-end 3D reconstruction but also improves the accuracy of the reconstruction process. After obtaining the high-precision 3D reconstruction model of the target object, products that are compatible with the target object can be selected and purchased based on this model, effectively addressing issues of product returns and exchanges caused by mismatched purchases.

### BRIEF DESCRIPTION OF THE DRAWINGS

The accompanying drawings described herein are provided to facilitate a better understanding of this application and constitute a part of the application. The illustrative embodiments and their descriptions in this application are provided to explain the application and do not impose undue limitations on its scope. In the drawings:
FIG. 1 illustrates the model architecture of a three-dimensional reconstruction network provided in an embodiment of this application;
FIG. 2 is a flowchart of a three-dimensional reconstruction method provided in an embodiment of this application;
FIG. 3 illustrates the model architecture of another three-dimensional reconstruction network provided in an embodiment of this application;
FIG. 4 illustrates the model architecture of a feature extraction network provided in an embodiment of this application;
FIG. 5 illustrates the model architecture of a feature extraction module within a feature extraction network provided in an embodiment of this application;
FIG. 6 illustrates the model architecture of a downsampling submodule provided in an embodiment of this application;
FIG. 7 is a flowchart of a product information processing method provided in an embodiment of this application;
FIG. 8 is a schematic diagram of the structure of a three-dimensional reconstruction apparatus provided in an embodiment of this application;
FIG. 9 is a schematic diagram of the structure of a computer device provided in an embodiment of this application.

### DETAIL DESCRIPTION OF THE EMBODIMENTS

To make the objectives, technical solutions, and advantages of this application clearer, the technical solutions of this application will be described in detail and comprehensively below in conjunction with specific embodiments and the accompanying drawings. It is evident that the described embodiments are merely a part of the embodiments of this application, rather than all of them. Based on the embodiments of this application, all other embodiments obtained by those of ordinary skill in the art without creative efforts fall within the scope of protection of this application.

In the embodiments of this application, the term "at least one" refers to one or more, and "multiple" refers to two or more; the term "and/or" describes the logical relationship between associated objects, indicating three possible relationships. for example, "A and/or B" may indicate: A exists alone, A and B exist simultaneously, or B exists alone. Here, A and B can be singular or plural. In the textual descriptions of this application, the character "/" generally indicates an "or" relationship between the associated objects before and after it. Furthermore, in the embodiments of this application, terms such as "first," "second," "third," "fourth," "fifth," and "sixth" are used solely to distinguish between different objects and do not carry any other specific meaning.

Existing solutions face the challenge of frequent returns and exchanges due to the mismatch of wearable products during the selection process. To address this, embodiments of the present disclosure provide a method, device, apparatus, and storage medium for three-dimensional reconstruction and product information processing. In the embodiments of the present disclosure, an initial three-dimensional (3D) model of a target object is created using the 3D model description information corresponding to the target object. Additionally, a novel 3D reconstruction network architecture is utilized to perform 3D reconstruction of the target object based on a plurality of images containing the target object. During the 3D reconstruction process, feature vectors are extracted from each of the plurality of images, and these feature vectors are concatenated. Based on the concatenated feature vectors, pose control parameters and shape control parameters for model control are predicted. Masking operations are then applied to the initial 3D model of the target object using the pose control parameters and shape control parameters to obtain the target 3D model of the target object. This 3D reconstruction approach significantly enhances the accuracy of the 3D model. The higher the accuracy of the 3D model, the stronger its realism, allowing it to more accurately represent the target object in the real world. This improvement effectively expands the application scope and enhances the effectiveness of 3D model-based solutions. Specifically, in product selection scenarios, the reconstructed 3D model can be used to select products that are compatible with the target object, providing the necessary conditions to address and resolve issues related to product returns and exchanges.

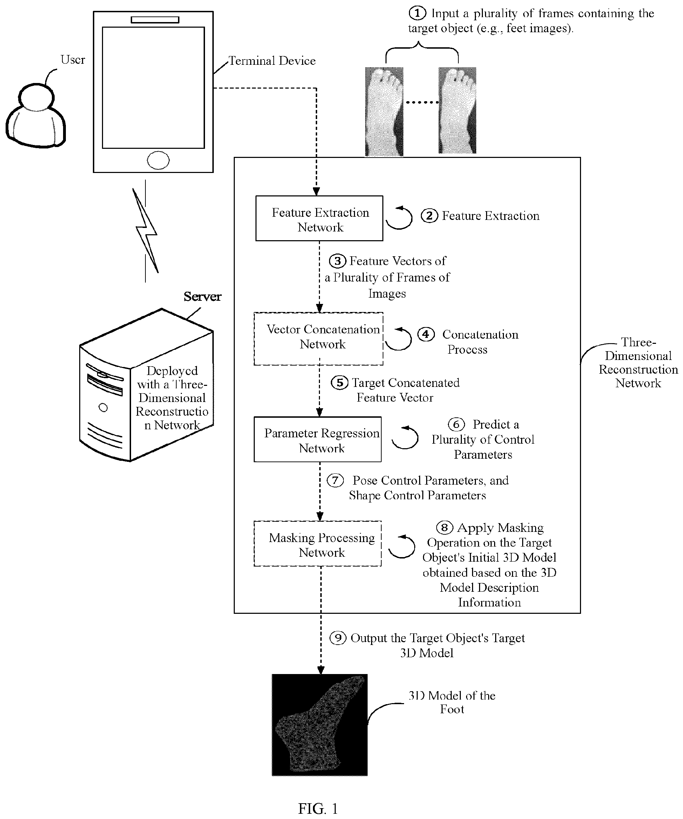

FIG. 1 illustrates the model architecture of a three-dimensional reconstruction network provided in an embodiment of this application. Referring to FIG. 1, the entire 3D reconstruction network may include: a feature extraction network, a vector concatenation network, a parameter regression network, and a masking processing network. In practical applications, the target object can be any object requiring 3D reconstruction. For example, the target object can be a body part such as a foot, hand, head, elbow, or leg; it can also be objects from nature, such as animals or plants; or even real-world 3D spatial scenes, such as houses or mountains. There are no restrictions in this regard. During the 3D reconstruction of a target object, an image acquisition device can first be used to capture video of the target object, thereby obtaining a video stream containing the target object. As shown in ① of FIG. 1, a plurality of consecutive frames of images containing the target object from the video stream are sequentially input into the 3D reconstruction network. As shown in ② and ③ of FIG. 1, the feature extraction network performs feature extraction on each frame of the image sequentially, extracting the feature vector of each frame. After obtaining the feature vectors of a plurality of frames of images, as shown in ④ and ⑤ of FIG. 1, the vector concatenation network processes the feature vectors of the plurality of frames in sequential order (from the earliest to the latest time of image capture), concatenating them to generate a target concatenated feature vector. Next, as shown in ⑥ and ⑦ of FIG. 1, the parameter regression network processes the target concatenated feature vector to predict a plurality of control parameters for model control. These control parameters may include pose control parameters and shape control parameters. Finally, as shown in ⑧ and ⑨ of FIG. 1, the masking processing network applies masking operations to the initial 3D model of the target object, which is obtained based on the 3D model description information. The final output is the target 3D model of the target object, thus completing the entire 3D reconstruction task.

In practical applications, the entire three-dimensional reconstruction network can be deployed on a terminal device, on a server, or partially on both, with some parts of the network deployed on the terminal device and others on the server. There are no restrictions in this regard. Optionally, the terminal device may include, but is not limited to, a mobile phone, tablet, laptop, wearable device, or in-vehicle device. The server may include, but is not limited to, a single server or a distributed server cluster composed of a plurality of servers.

It should be understood that the model architecture of the three-dimensional reconstruction network shown in FIG. 1 is merely illustrative. For example, the feature extraction network can also include concatenation processing functionality, eliminating the need for a dedicated vector concatenation network in the 3D reconstruction network. Similarly, the parameter regression network may include masking processing functionality, removing the need for a separate masking processing network. Any neural network architecture with the capabilities for feature extraction, vector concatenation, parameter regression, and masking processing is applicable to the embodiments of this application.

The following describes in detail the technical solutions provided in various embodiments of this application with reference to the accompanying drawings.

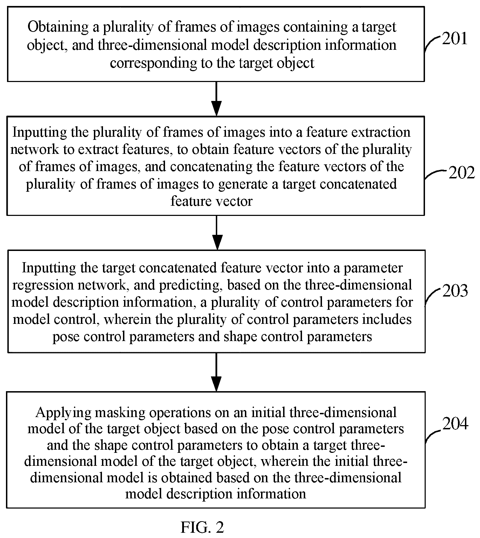

FIG. 2 illustrates a flowchart of a three-dimensional reconstruction method provided in an embodiment of this application. Referring to FIG. 2, the method may include the following steps:
**S201:** obtaining a plurality of frames of images containing a target object, and three-dimensional model description information corresponding to the target object;
**S202:** inputting the plurality of frames of images into a feature extraction network to extract features, to obtain feature vectors of the plurality of frames of images, and concatenating the feature vectors of the plurality of frames of images to generate a target concatenated feature vector;
**S203:** inputting the target concatenated feature vector into a parameter regression network, and predicting, based on the three-dimensional model description information, a plurality of control parameters for model control, wherein the plurality of control parameters include pose control parameters and shape control parameters;
**S204:** applying a masking operation on an initial three-dimensional model of the target object based on the pose control parameters and the shape control parameters to obtain a target three-dimensional model of the target object, wherein the initial three-dimensional model is obtained based on the three-dimensional model description information.

In one embodiment, the three-dimensional model description information corresponding to the target object is prepared in advance. When the target object is a body part, the three-dimensional model description information corresponding to the target object can be determined based on the SMPL (Skinned Multi-Person Linear Model). SMPL is a skinned, vertex-based 3D human body model capable of accurately representing different shapes and poses of the human body. It provides a robust framework for modeling human body parts with high precision.

The three-dimensional model description information describes the number of vertices required for the target object's three-dimensional model, the positional information of each vertex, and the number of parameters used for model control. Based on the positional information of each vertex, the initial three-dimensional model of the target object can be constructed. Taking the target object as a foot as an example, a three-dimensional model constructed with 1,600 vertices can be used as the initial three-dimensional model for the foot. The number 1,600 is only an example and is not limited to this; the specific number of vertices required for the three-dimensional model can be flexibly selected according to the model's accuracy. The number of parameters used for model control is not restricted and can also be flexibly set according to the accuracy and complexity of the model control. For example, the plurality of control parameters used for model control may include pose control parameters and shape control parameters, where the pose control parameters are used to control the pose of the three-dimensional model, and the shape control parameters are used to control the shape of the three-dimensional model. The pose control parameters may include three pose angles: roll, pitch, and yaw. The three pose angles can control the pose of the three-dimensional model. The shape control parameters may vary depending on the target object, and a change in any shape parameter may cause a change in the shape of one or more parts of the target object. Taking the target object as a foot as an example, the shape control parameters may include 10 shape parameters, which can control features such as the size of the toes, the width or slenderness of the foot, longitudinal and transverse stretching, and the curvature of the arch. Taking the target object as a head as an example, the shape control parameters may include 8 shape parameters, which can control features such as the size of the mouth, the height of the nose bridge, the distance between the eyes, and the width of the forehead. Taking the target object as a house as an example, the shape control parameters may include 30 shape parameters, which can control features such as the floor height, the overall size of the house, and the structure of the exterior walls.

Since the initial three-dimensional model has low accuracy and lacks realism, making it difficult to accurately represent the target object in the real world, the three-dimensional reconstruction network is utilized to reconstruct the target three-dimensional model of the target object in order to improve the accuracy of the three-dimensional model.

In this embodiment, to enhance the robustness of the model and introduce a certain smoothing effect, a plurality of frames of images containing the target object can be obtained and input into the three-dimensional reconstruction network for 3D reconstruction. There is no limitation on the number of image frames, which can be, for example, 3 frames, 4 frames, 5 frames, etc. In practical applications, video of the target object can be captured in advance to obtain a video stream, which can be locally stored. When 3D reconstruction of the target object is required, a plurality of frames of images containing the target object can be extracted from the locally stored video stream. Of course, real-time video capture of the target object can also be performed to obtain a video stream, and a plurality of frames of images containing the target object can be extracted from the real-time video stream. There are no restrictions in this regard.

In practical applications, for each frame of the plurality of frames of images containing the target object, the frame can be directly input into the feature extraction network of the three-dimensional reconstruction network for feature extraction. Specifically, each frame in the plurality of frames of images can be sequentially treated as the current frame, and the current frame can be directly input into the feature extraction network for feature extraction. During this process, the feature vector extracted from each frame of the image can be saved. Thus, when performing 3D reconstruction using a plurality of frames of images, the current frame can be input into the feature extraction network of the 3D reconstruction network for feature extraction, while the feature vectors of several previous historical frames can be directly retrieved from the corresponding storage space. However, this is not the only approach. For example, it is also possible to input the current frame along with several previous historical frames into the feature extraction network simultaneously for feature extraction. Further optionally, since the current frame includes not only the target object but also the surrounding environment of the target object during image capture, the accuracy of feature extraction can be improved by cropping the current frame and performing feature extraction on the cropped image. Thus, when the current frame is input into the feature extraction network for feature extraction to obtain the feature vector of the current frame, the image position of the target object within the current frame can be detected, and a localized image containing only the target object can be cropped based on this position from the current frame. The localized image can then be input into the feature extraction network for feature extraction, thereby obtaining the feature vector of the current frame. The category and position of the target object in the image can be detected using an object detection algorithm (Object Detection).

Further optionally, to accurately locate the image position of the target object, when detecting the image position of the target object in the current frame, the current frame can be sequentially preprocessed. The preprocessing includes at least one of image scaling and normalization. The preprocessed image is then input into a target detection network for object detection to obtain the image position of the target object in the preprocessed image.

For example, when capturing consecutive images of a foot, 4 original images are obtained. These 4 original images are scaled to a height of 160 pixels and a width of 90 pixels. The scaled images are then normalized using the Z-Score (standard score) method. The 4 normalized images are input into a real-time foot target detection network for foot detection to obtain the image positions of the foot. Based on the detected image positions of the foot, 4 cropped foot images are extracted from the 4 original images, each with a size of 128*128 pixels. The 128*128-pixel foot images can then be input into the feature extraction network for feature extraction.

In this embodiment, there are no restrictions on the model architecture of the feature extraction network. Any network with feature extraction capabilities can be used as the feature extraction network.

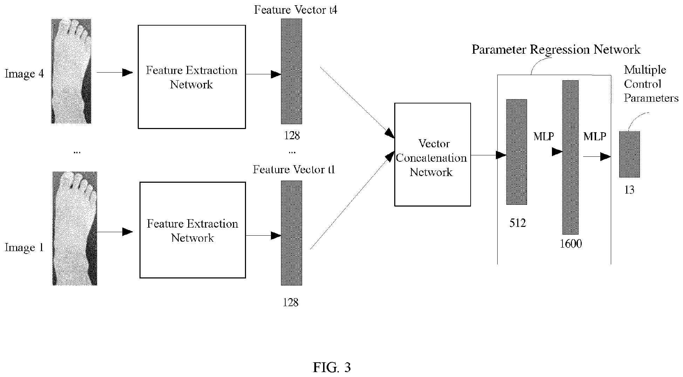

In practical applications, the feature extraction network can be used to extract features from each frame of the plurality of frames of images to obtain a feature vector for each frame. After completing the feature extraction for all images, the feature vectors corresponding to the plurality of images can be concatenated to form the target concatenated feature vector. Referring to FIG. 3, after cropping, images 1, 2, 3, and 4 are processed by the feature extraction network to extract their respective 128-dimensional feature vectors. Using a vector concatenation network, the 4 128-dimensional feature vectors are concatenated to obtain a 512-dimensional feature vector. The 512-dimensional feature vector is the target concatenated feature vector.

In practical applications, the feature extraction network can be used to extract features from each frame of the image to obtain a feature vector for that frame, and the feature vector for the frame can be stored in a designated storage space. Once feature extraction for the most recent frame (the current frame) among the plurality of frames of images is completed, the feature vector of the current frame and the feature vectors of at least one historical frame retrieved from the designated storage space can be concatenated. For example, the plurality of frames of images include the current frame and at least one historical frame. Inputting the plurality of frames of images into the feature extraction network for feature extraction to obtain their feature vectors includes the following steps: inputting the current frame into the feature extraction network to extract its feature vector; concatenating the feature vectors of the plurality of frames of images to obtain the target concatenated feature vector, including using a predefined sliding window to retrieve the feature vectors of at least one historical frame from the designated storage space; concatenating the feature vector of the current frame with the feature vectors of at least one historical frame to form the target concatenated feature vector. It is important to note that the sliding window is used to control the number of historical frames retrieved from the designated storage space. For example, in a scenario where 4 frames are used for 3D reconstruction, the length of the sliding window can be 3. In a scenario where 5 frames are used for 3D reconstruction, the length of the sliding window can be 4.

In this embodiment, after concatenating the feature vectors of the plurality of frames of images to obtain the target concatenated feature vector, the target concatenated feature vector is input into the parameter regression network. Based on the three-dimensional model description information, a plurality of control parameters for model control is predicted.

In this embodiment, there are no restrictions on the model architecture of the parameter regression network. Any trained model capable of predicting control parameters can serve as the parameter regression network. Optionally, the parameter regression network can take the form of an MLP (Multilayer Perceptron) network and perform at least one MLP operation. An MLP network includes a plurality of input layers, a plurality of output layers, and a plurality of hidden layers. It is a type of feedforward artificial neural network model that maps a plurality of input datasets to a single output dataset. Optionally, inputting the target concatenated feature vector into the parameter regression network and predicting a plurality of control parameters for model control based on the three-dimensional model description information includes: inputting the target concatenated feature vector into the parameter regression network and performing at least one MLP operation on the target concatenated feature vector based on the three-dimensional model description information to obtain a plurality of control parameters for model control.

Referring to FIG. 3, as an example of performing two MLP operations on the target concatenated feature vector using the parameter regression network: the 512-dimensional feature vector output by the vector concatenation network is subjected to the first MLP operation to obtain a 1600-dimensional feature vector; the 1600-dimensional feature vector is then subjected to a second MLP operation to obtain a 13-dimensional feature vector. Each element in the 13-dimensional feature vector represents a control parameter, resulting in 13 control parameters. It should be noted that the number 13 is merely an example of the quantity of control parameters and can be flexibly set based on the target object, control complexity, and other requirements.

After the parameter regression network outputs the pose control parameters and shape control parameters, the initial three-dimensional model of the target object is processed through masking operations based on these parameters to obtain the target three-dimensional model of the target object. Since the initial three-dimensional model is generated based on the three-dimensional model description information, its accuracy needs improvement. During the masking process, the pose control parameters are used to adjust the pose of the initial three-dimensional model, and the shape control parameters are used to adjust the shape of the initial three-dimensional model to obtain a higher-accuracy target three-dimensional model. It is worth noting that, in addition to adjusting the pose and shape of the three-dimensional model, the masking process can also establish connections between the vertices and skeletons included in the 3D model. This embodiment does not provide further details on the skinning process.

The technical solution provided in embodiments of the present disclosure involve creating the initial three-dimensional model of the target object using the three-dimensional model description information corresponding to the target object. A plurality of images containing the target object are then used for three-dimensional reconstruction. During the reconstruction process, feature vectors are extracted from each image, and these feature vectors are concatenated. Based on the concatenated feature vector, pose control parameters and shape control parameters for model control are predicted. The initial three-dimensional model of the target object is then processed through masking operations according to these pose control parameters and shape control parameters to obtain the target three-dimensional model of the target object. This three-dimensional reconstruction method significantly improves the accuracy of the 3D model. The higher the accuracy of the 3D model, the stronger its realism, allowing it to better represent the target object in the real world. This effectively expands the application scope of 3D models and enhances their practical effectiveness. In particular, in the context of product selection, the reconstructed 3D model can be used to select products that are compatible with the target object, thereby providing the necessary conditions to address and resolve issues related to returns and exchanges in existing solutions.

In some optional embodiments of this application, to achieve more accurate feature extraction, the feature extraction network can combine image features and camera pose data for feature extraction. As an example, the feature extraction network may include a feature extraction module, a camera parameter fusion module, a feature concatenation module, and a feature dimensionality reduction module. Inputting a plurality of frames of images into the feature extraction network for feature extraction to obtain feature vectors for the images includes the following steps: for each frame in the plurality of frames of images, inputting the frame into the feature extraction module of the feature extraction network to perform feature extraction, obtaining the image feature map of the frame; inputting the camera pose data captured during the acquisition of the frame into the camera parameter fusion module of the feature extraction network to perform feature extraction, obtaining the camera pose feature map of the frame; using the feature concatenation module of the feature extraction network to concatenate the image feature map and the camera pose feature map for each frame, obtaining a concatenated feature map for each frame; using the feature dimensionality reduction module of the feature extraction network to perform dimensionality reduction on the concatenated feature map of each frame, thereby obtaining the feature vector for each frame.

Specifically, the feature extraction module is used to extract the image feature map of each frame. Furthermore, there are no restrictions on the model structure of the feature extraction module; any feature extraction network capable of extracting image features can serve as the feature extraction module.

The camera parameter fusion module is a module used for extracting features from camera pose data. Furthermore, there are no restrictions on the model structure of the camera parameter fusion module; any network capable of extracting features from camera pose data can serve as the camera parameter fusion module.

Further optionally, to obtain a more accurate camera pose feature map for each frame, the implementation of extracting the camera pose feature map by inputting the camera pose data captured during the acquisition of the frame into the camera parameter fusion module of the feature extraction network can be as follows: the camera pose data captured during the acquisition of the frame is input into the camera parameter fusion module of the feature extraction network; the camera pose data includes at least two pose angles; trigonometric processing is performed based on the at least two pose angles and their mutual relationships to obtain a plurality of pose representation parameters; the plurality of pose representation parameters are then processed using the Multilayer Perceptron (MLP) network within the camera parameter fusion module to generate the camera pose feature map for the frame.

Specifically, the camera pose data may include at least two pose angles from yaw, pitch, and roll. As an example, trigonometric processing is performed based on at least two pose angles and their mutual relationships to obtain a plurality of pose representation parameters, including: performing numerical calculations on every pair of the at least two pose angles to obtain a plurality of fused pose angles, where each fused pose angle represents the mutual relationship between two corresponding pose angles; performing trigonometric processing on each of the at least two pose angles as well as on each of the plurality of fused pose angles to obtain a plurality of pose representation parameters.

In practical applications, various numerical calculations, such as addition, subtraction, or multiplication, can be performed on every pair of at least two pose angles to generate a plurality of fused pose angles. Each fused pose angle represents the mutual relationship between two corresponding pose angles. When performing trigonometric processing on each pose angle and each fused pose angle, operations such as cosine, sine, cotangent, or tangent functions can be applied, but the processing is not limited to these functions.

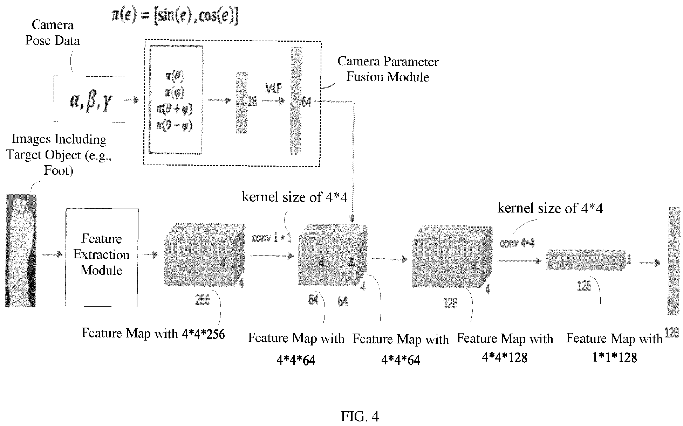

Referring to FIG. 4, the camera pose data may include the yaw angle α, pitch angle β, and roll angle γ. Let θ represent any one of the yaw angle α, pitch angle β, and roll angle γ, and let ψ represent any other pose angle excluding θ. Adding any two different pose angles θ and ψ yields a fused pose angle θ+ψ, while subtracting any two different pose angles yields a fused pose angle θ-ψ. This results in 6 fused pose angles: α+β, α+γ, β+γ, α-β, α-γ, and β-γ. The 3 pose angles and the 6 fused pose angles can each be processed with trigonometric functions, such as the sine function sin(e) and cosine function cos(e), represented generically as τ(e). This processing produces 18 trigonometric results, i.e., 18 pose representation parameters. These 18 pose representation parameters form an 18-dimensional vector.

After obtaining a plurality of pose representation parameters, a Multilayer Perceptron (MLP) network is used to process these pose representation parameters to generate the camera pose feature map for the frame. As an example, the implementation of using an MLP network to process a plurality of pose representation parameters and generate the camera pose feature map can be as follows: the plurality of pose representation parameters are vectorized to form a camera pose feature vector. This feature vector is then processed by the MLP network to generate the camera pose feature map. Referring to FIG. 4, an 18-dimensional camera pose feature vector, composed of the 18 pose representation parameters, is input into the MLP network for processing. The MLP network outputs a 64-dimensional feature vector, which is then transformed into a feature map with dimensions of 4*4*64. This 4*4*64 feature map is the camera pose feature map.

In this embodiment, for each frame of the image, the feature concatenation module in the feature extraction network is used to concatenate the image feature map of the frame, output by the feature extraction module, with the camera pose feature map of the frame, output by the camera parameter fusion module, to obtain the concatenated feature map for the frame. The dimensionality reduction module in the feature extraction network is then used to perform dimensionality reduction on the concatenated feature map for the frame to obtain the concatenated vector for the frame.

Referring to FIG. 4, the feature concatenation module outputs a feature map with dimensions of 4*4*256. A convolution module with a kernel size of 1*1 is applied to the 4*4*256 feature map for dimensionality reduction to obtain a 4*4*64 feature map. This 4*4*64 feature map is concatenated with the 4*4*64 feature map output by the camera parameter fusion module to obtain a 4*4*128 feature map. A convolution module with a kernel size of 4*4 is then applied to the 4*4*128 feature map for further dimensionality reduction to obtain a 1*1*128 feature map. The 1*1*128 feature map is then transformed into a 128-dimensional feature vector. At this point, the feature extraction task for the frame is completed.

In some optional embodiments of this application, to improve the accuracy of feature extraction, the feature extraction module in the feature extraction network may include a skip connection layer and a downsampling layer connected sequentially. Thus, for each frame in the plurality of frames of images, an optional implementation of extracting the image feature map of the frame by inputting the frame into the feature extraction module in the feature extraction network can be as follows: for each frame in the plurality of frames of images, the frame is input into the skip connection layer of the feature extraction module. Multi-resolution feature maps are extracted from the frame, and feature maps with the same resolution are connected via skip connections to obtain a second intermediate feature map of the frame. The second intermediate feature map of the frame is then input into the downsampling layer of the feature extraction module for M downsampling processes to obtain the image feature map of the frame, where M is a positive integer greater than or equal to 1.

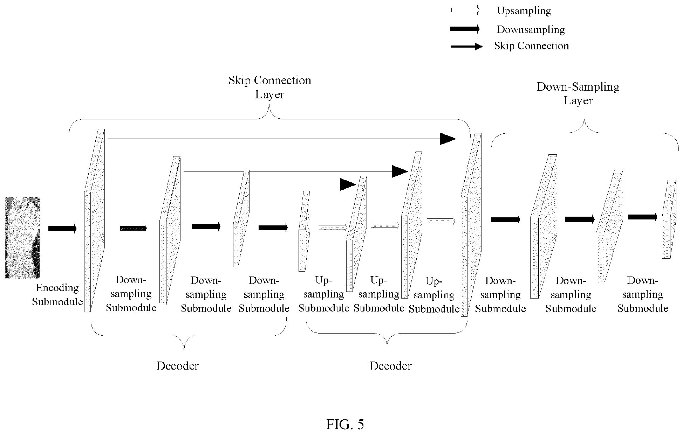

Specifically, the skip connection layer can perform a plurality of downsampling and upsampling operations, and execute skip connections during the upsampling process. For each upsampling operation, the feature map from the current input is upsampled to obtain the output feature map for this upsampling. This output feature map is then concatenated with an already obtained feature map of the same resolution, i.e., a skip connection is performed to obtain the final output feature map of this upsampling. Referring to FIG. 5, the skip connection layer first extracts features from the input image to obtain the initial feature map of the input image. Then, a plurality of downsampling operations are performed on this initial feature map. For each downsampling operation, the feature map output from the previous downsampling operation is used as input, and this feature map is downsampled to obtain the output feature map of the current downsampling operation. For the first downsampling operation, the input feature map is the initial feature map. In this way, a plurality of feature maps with different resolutions can be obtained through a plurality of downsampling operations. The feature map output from the last downsampling operation is used as the first intermediate feature map. Next, a plurality of upsampling operations are performed on the first intermediate feature map. During each upsampling operation, the feature map output from the previous upsampling operation is used. The feature map output from the previous downsampling operation is upsampled to obtain the intermediate feature map for the current upsampling operation. The intermediate feature map output from the current upsampling operation is concatenated with the feature map of the same resolution obtained from downsampling or feature extraction, i.e., a skip connection is performed to obtain the final output feature map of the current upsampling operation. After a plurality of upsampling operations, the feature map output from the final upsampling operation is used as the second intermediate feature map, which is the feature map obtained by the skip connection layer after performing feature extraction on the input image.

As an example, the skip connection layer adopts an encoder-decoder structure. For each frame, the frame is input into the skip connection layer in the feature extraction module to perform multi-resolution feature map extraction and skip connections for feature maps of the same resolution to obtain the second intermediate feature map. This process includes: input the frame into the encoder in the skip connection layer. The frame is encoded to obtain the initial feature map of the frame, and the initial feature map is successively subjected to N downsampling operations to obtain the first intermediate feature map. Input the first intermediate feature map into the decoder in the skip connection layer. The first intermediate feature map is successively subjected to N upsampling operations, and during each upsampling operation, the feature map resulting from the corresponding downsampling operation in the encoder with the same resolution is connected via skip connections. This produces the second intermediate feature map of the frame. Referring to FIG. 5, the four arrows in the skip connection layer that represent downsampling correspond to the encoder, while the three arrows that represent upsampling correspond to the decoder.

In one possible implementation, the encoder includes an encoding submodule and N downsampling submodules connected sequentially. To encode the frame in the skip connection layer, the frame is input into the encoder, where it is encoded to produce the initial feature map of the frame, and the initial feature map is then subjected to N downsampling operations to obtain the first intermediate feature map. This process includes: input the frame into the encoding submodule to encode it and produce the initial feature map of the frame. Use the N downsampling submodules to perform N downsampling operations on the initial feature map to obtain the first intermediate feature map. In each downsampling submodule, K₁ convolutional units connected sequentially are used, where each convolutional unit corresponds to specific target convolution parameters. The input is convolved using these parameters to produce an intermediate feature map awaiting activation. An activation function is then applied to the intermediate feature map to activate it to obtain the output of each convolutional unit. K₁ is a positive integer greater than or equal to 2. In this embodiment, the number of convolutional units included in each downsampling submodule of the encoder is not restricted. For example, it can be 2, 3, 4, or 5, among other possible values.

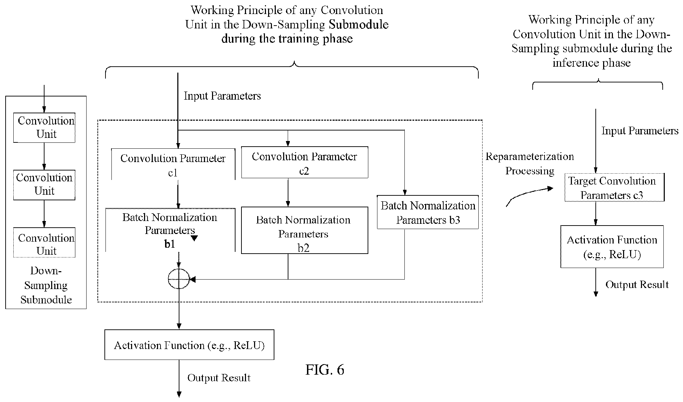

Referring to FIG. 6, an example is illustrated where each downsampling submodule includes three convolutional units connected sequentially. The output of the previous convolutional unit serves as the input to the next convolutional unit. The input to the first convolutional unit in the first downsampling submodule is the initial feature map output by the encoding submodule. The output of the last convolutional unit in the final downsampling submodule is the first intermediate feature map.

During the inference phase of the three-dimensional reconstruction network, the target convolution parameters corresponding to each convolutional unit are obtained by applying re-parameterization techniques to merge the parameters of a plurality of branches used during the training phase. Introducing a plurality of branches during the training phase of the three-dimensional reconstruction network can improve its accuracy, while merging these branches during the inference phase can enhance the efficiency of the three-dimensional reconstruction process.

Referring to FIG. 6, during the training phase, the computation process of each convolutional unit in the downsampling submodule is divided into three branches. Assume the parameters of the first branch are denoted as c1 and b1, the parameters of the second branch are denoted as c2 and b2, and the parameters of the third branch are denoted as b3. Here, c1 and c2 are convolution parameters, while b1, b2, and b3 are BN (Batch Normalization) parameters. The input parameters are sequentially processed through the convolution parameters and batch normalization parameters of the three branches. The outputs of the three branches are then added together to obtain an intermediate feature map awaiting activation. An activation function (e.g., ReLU or sigmoid) is applied to the intermediate feature map to activate it, producing the output of each convolutional unit.

Referring to FIG. 6, during the inference phase, through the application of re-parameterization techniques, the target convolution parameters of each convolutional unit in the downsampling submodule are obtained by merging the convolution parameters and batch normalization parameters of the three branches used during the training phase. It should be understood that the intermediate feature map awaiting activation, obtained by processing the same input parameters using the three branches' convolution parameters and batch normalization parameters during the training phase, is identical to the intermediate feature map awaiting activation obtained by processing the input using the re-parameterized target convolution parameter c3 during the inference phase. In other words, while re-parameterization changes the computation process applied to the input parameters, it does not alter the computation results of the input parameters.

In some embodiments of this application, the feature extraction module in the feature extraction network includes a skip connection layer and a downsampling layer connected sequentially. Furthermore, the downsampling layer includes a plurality of downsampling submodules connected sequentially. Each downsampling submodule can be any module with downsampling functionality, and there are no restrictions on its structure. Referring to FIG. 3, in the downsampling layer, each downsampling submodule performs downsampling on the feature map output by the previous downsampling submodule to obtain the feature map output by the current downsampling submodule. The first downsampling submodule performs downsampling on the second intermediate feature map output by the skip connection layer. The feature map output by the last downsampling submodule serves as the output of the downsampling layer.

Further optionally, the downsampling layer includes M downsampling submodules connected sequentially. The second intermediate feature map of the frame is input into the downsampling layer of the feature extraction module for M downsampling operations to obtain the image feature map of the frame. This process includes: performing M downsampling operations on the second intermediate feature map using the M downsampling submodules to obtain the image feature map of the frame. In each downsampling submodule, K₂ convolutional units connected sequentially are used. Each convolutional unit applies its corresponding target convolution parameters to perform convolution operations on the input, producing an intermediate feature map awaiting activation. An activation function is then applied to activate the intermediate feature map, producing the output of each convolutional unit. K₂ is a positive integer greater than or equal to 2. In this embodiment, there are no restrictions on the number of convolutional units in each downsampling submodule of the downsampling layer. For example, the number of units can be 2, 3, 4, or 5, among other possibilities. In an optional embodiment, each downsampling submodule in the downsampling layer may include 3 convolutional units and can adopt the structure of the downsampling submodule shown in FIG. 6, but it is not limited to this configuration.

In some optional embodiments, after obtaining the target three-dimensional model, for each frame in the plurality of frames of images, the target 3D model is adapted to the target object in the frame based on the camera pose data recorded at the time of the frame's acquisition. Based on the adaptation results, suitable products that match the target object are selected for purchase.

Specifically, for each frame of the image, camera extrinsic parameters can be obtained based on the camera pose data captured at the time of the frame's acquisition. The camera extrinsic parameters refer to the parameters of the camera in the world coordinate system, such as the position and rotation direction of the camera, which are mainly divided into a rotation matrix and a translation matrix. Of course, a camera parameter estimation network can be trained in advance using a large number of sample images and the corresponding camera extrinsic parameters recorded at the time the sample images were captured. During the inference phase, the image is input into the camera parameter estimation network for recognition, and the corresponding camera extrinsic parameters at the time of image capture are obtained. After obtaining the camera extrinsic parameters, based on the pinhole imaging theory, the vertices of the target three-dimensional model are projected onto the frame of the image using the camera extrinsic parameters to obtain projection points corresponding to each vertex of the target three-dimensional model. Using feature point matching techniques, real image feature points from the frame's actual image are identified that match the projection points. For each projection point, the adaptation result between the vertex on the real-world target object and the vertex on the target three-dimensional model is determined based on the difference between the image position of the projection point and the image position of the corresponding real image feature point. Real image feature points refer to the feature points on the target object in the real world corresponding to the vertices. For example, the adaptation degree between the vertex on the real-world target object and the vertex on the target three-dimensional model can be quantified based on the difference between the image positions of the real image feature points and the projection points. The larger the difference, the smaller the adaptation degree; the smaller the difference, the greater the adaptation degree. After obtaining the adaptation results between the vertices on the real-world target object and the corresponding vertices on the target three-dimensional model, suitable products that match the target object can be selected for purchase based on the adaptation results.

As an example, when providing the target object with target product information that matches the target 3D model, the system can compare the target 3D model with the product 3D models corresponding to a plurality of candidate product options. The candidate product information corresponding to the product 3D model with the highest adaptation degree to the target 3D model is selected as the target product information, which is then provided to the target object.

As another example, when providing the target object with target product information that matches the target 3D model, the system can customize a product 3D model that matches the target 3D model based on the model parameters of the target 3D model and the selected product type. The product information corresponding to the customized product 3D model is then provided to the target object as the target product information.

In some optional embodiments, any frame of the plurality of frames of images can be input into a depth estimation network to estimate the size information of the target object. Based on the estimated size information of the target object, annotations can be added to the target three-dimensional model.

In practical applications, a depth estimation network can be pre-trained using a large number of sample images and the size information of the target objects within those sample images. During the inference phase, an image is input into the depth estimation network to estimate the size information of the target object. The size information may include, but is not limited to, the length and width of the target object. The estimated size information of the target object can then be annotated on the target three-dimensional model. For example, in a virtual shoe-fitting scenario, there may be a need to measure foot length and foot width. In this case, the reconstructed 3D model of the foot can be annotated with the foot length and foot width.

In some optional embodiments, for each frame in the plurality of frames of images, the target 3D model is adapted to the target object in the frame based on the camera pose data captured at the time of the frame's acquisition. Based on the adaptation results, the shape parameters of the target object are measured.

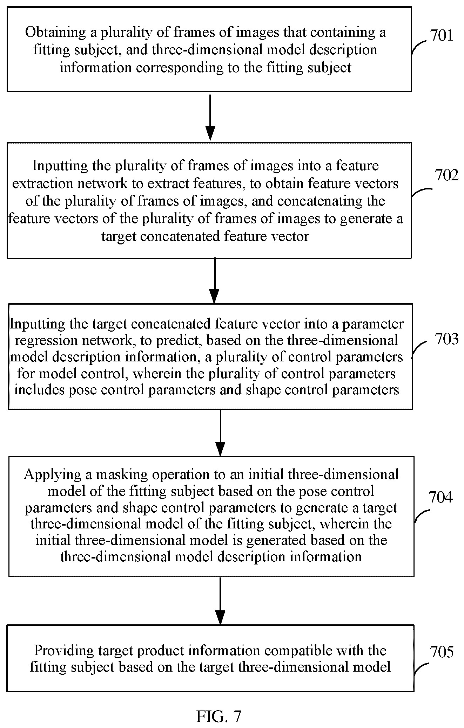

**FIG.** 7 illustrates a flowchart of a product information processing method provided in the embodiments of the present disclosure. Referring to FIG. 7, the method may include the following steps:
**S701:** obtaining a plurality of frames of images that containing a fitting subject, and three-dimensional model description information corresponding to the fitting subject;
S702: inputting the plurality of frames of images into a feature extraction network to extract features, to obtain feature vectors of the plurality of frames of images, and concatenating the feature vectors of the plurality of frames of images to generate a target concatenated feature vector;
**S703:** inputting the target concatenated feature vector into a parameter regression network, to predict, based on the three-dimensional model description information, a plurality of control parameters for model control, wherein the plurality of control parameters includes pose control parameters and shape control parameters;
**S704:** applying a masking operation to an initial three-dimensional model of the fitting subject based on the pose control parameters and shape control parameters to generate a target three-dimensional model of the fitting subject, wherein the initial three-dimensional model is generated based on the three-dimensional model description information;
**S705:** providing target product information compatible with the fitting subject based on the target three-dimensional model.

Further optionally, providing the fitting subject with target product information that is compatible with the target three-dimensional model includes: based on the target three-dimensional model and the product 3D models corresponding to a plurality of candidate product information, select the product information corresponding to the product 3D model with the highest adaptation degree to the target 3D model as the target product information, and provide this target product information to the fitting subject; or based on the model parameters corresponding to the target 3D model and the selected product type, customize a product 3D model that matches the target 3D model for the fitting subject. Then, provide the product information corresponding to the customized product 3D model as the target product information to the fitting subject.

Further optionally, selecting the product information corresponding to the product 3D model with the highest adaptation degree to the target 3D model from a plurality of candidate product information includes: for each product 3D model corresponding to the candidate product information, fuse the target 3D model of the fitting subject with the product 3D model to generate a fused 3D model, and the fused 3D model represents the first relative positional relationship between the fitting subject's 3D model and the product 3D model in the try-on state; based on the first relative positional relationship, obtain a plurality of distance metrics between several target vertices on the fitting subject's 3D model and the corresponding vertices or regions on the product 3D model, and these distances are used as the adaptation degree information of the target vertices; determine the adaptation degree between the target 3D model and the product 3D model based on the adaptation degree information of the target vertices; after obtaining the adaptation degree of each candidate product's 3D model with the target 3D model, select the product information corresponding to the product 3D model with the highest adaptation degree to the target 3D model as the target product information.

An optional implementation for fusing the fitting subject's target 3D model with the product 3D model corresponding to each candidate product information to obtain the fused 3D model includes: obtain the fitting subject's target 3D model, the product 3D model, and the target fitting parameters of the fitting subject corresponding to the product object represented by the product 3D model; based on the target fitting parameters, determine the second relative positional relationship between at least three reference vertices on the fitting subject's target 3D model and the corresponding reference vertices on the product 3D model; according to the second relative positional relationship, place at least a portion of the fitting subject's target 3D model within the product 3D model to obtain the fused 3D model.

In practical applications, the target fitting parameters can be set based on experience. Further optionally, the target fitting parameters for the fitting subject with respect to the product object can also be determined based on the fitting subject's attribute information, the fitting preferences of the user associated with the fitting subject, and/or the reference fitting parameters corresponding to the product object.

When the fitting subject is a foot and the product object is a shoe, determining the second relative positional relationship between a plurality of reference vertices on the target 3D model of the fitting subject and the corresponding reference vertices on the shoe's 3D model, based on the target fitting parameters, includes at least one of the following:
**Method** 1: determining the second relative positional relationship by setting the distance between the first heel vertex on the 3D model of the foot and the second heel vertex on the 3D model of the shoe to be equal to the fitting distance based on the fitting distance between the shoe and the heel.

During 3D reconstruction, each vertex included in the 3D model of the foot can be labeled with a vertex type. Vertex types may include, for example, heel vertices, sole vertices, or toe vertices. Based on the vertex type, one vertex on the heel of the 3D model of the foot is selected as the first heel vertex. Using the positional distribution of the first heel vertex on the heel, a corresponding second heel vertex is selected from the plurality of heel vertices on the 3D model of the shoe. The selection is based on the similarity of the positional distribution between the first heel vertex and the second heel vertex. During the fusion of the 3D models, within the same coordinate system, the distance between the first heel vertex and the second heel vertex is controlled to equal the fitting distance.

**Method** 2: determining the second relative positional relationship by ensuring that the first sole vertex on the 3D model of the foot coincides with the second sole vertex on the 3D model of the shoe based on the fitting relationship between the sole of the foot and the sole of the shoe.

Selecting several first sole vertices from the plurality of vertices included in the 3D model of the foot based on vertex types. Using the positional distribution of the sole vertices relative to the heel, select several second sole vertices from the plurality of vertices on the 3D model of the shoe that share the same positional distribution as the first sole vertices. During the fusion of the 3D models, within the same coordinate system, control the vertex positions of each pair of first sole vertices and second sole vertices to be the same or similar, ensuring that the sole of the foot aligns and fits closely with the sole of the shoe.

**Method** 3: based on the alignment relationship between the center of the sole of the foot and the center of the sole of the shoe, determine the second relative positional relationship by ensuring that the first centerline vertex, located on the centerline of the sole in the 3D model of the foot, aligns with the second centerline vertex, located on the centerline of the sole in the 3D model of the shoe, along the foot-length direction.

Based on vertex types and vertex positions, select a vertex located on the centerline of the sole from the plurality of vertices included in the 3D model of the foot as a first centerline vertex. From the plurality of vertices in the 3D model of the shoe, select a vertex with the same positional distribution as the first centerline vertex as the corresponding second centerline vertex. During the fusion of the 3D models, within the same coordinate system, control the alignment of the first centerline vertex and the second centerline vertex along the foot-length direction.

In this embodiment, the position coordinates of each vertex included in the target 3D model of the fitting subject and the position coordinates of each vertex included in the product 3D model are uniformly transformed into the same coordinate system. The target 3D model of the fitting subject and the product 3D model are controlled to maintain the second relative positional relationship. This completes the operation of placing at least part of the target 3D model of the fitting subject within the product 3D model to obtain the fused 3D model.

Specifically, in the fused 3D model, the target 3D model of the fitting subject and the product 3D model maintain the first relative positional relationship. In this fused state, the adaptation degree information calculation operation is performed. The adaptation degree information reflects the degree of fit during wear. Firstly, a plurality of target vertices participating in the adaptation degree information calculation are selected from the vertices included in the target 3D model of the fitting subject. For example, every vertex on the target 3D model of the fitting subject can be selected as a target vertex. Further, to reduce the data processing volume while ensuring the accuracy of the adaptation degree information calculation, only a subset of vertices can be selected as target vertices from the target 3D model of the fitting subject. For instance, based on the critical part information of the fitting subject, the vertices corresponding to the critical part information on the target 3D model can be selected as target vertices. Critical parts may include, but are not limited to: toes, heel, arch, instep, inner instep, outer instep, sole, etc.

After determining a plurality of target vertices on the target 3D model of the fitting subject that participate in the adaptation degree information calculation, the adaptation degree information for each target vertex can be determined based on the distance between the target vertex and the corresponding vertex on the product 3D model. Further optionally, to better measure the adaptation degree information, the distance between the target vertex and the region surrounding the corresponding vertex on the product 3D model can be used as the adaptation degree information for the target vertex. Based on the first relative positional relationship, the adaptation degree information of a plurality of target vertices can be obtained by calculating the distances between the plurality of target vertices on the target 3D model of the fitting subject and the corresponding regions on the product 3D model. This includes: for each target vertex on the target 3D model of the fitting subject, use the first relative positional relationship to identify the nearest first vertex on the product 3D model to the target vertex; treat the plurality of triangular facets connected to the first vertex as the corresponding region on the product 3D model for the target vertex; calculate plurality of distances from the target vertex to the triangular facets in the region; and generate the adaptation degree information for the target vertex based on the calculated distances.

The distance from the target vertex to a triangular facet may include, but is not limited to: the distance from the target vertex to the center point of the triangular facet, the perpendicular distance from the target vertex to the triangular facet, or the maximum, minimum, or average distance from the target vertex to the three vertices of the triangular facet. In practical applications, the maximum, minimum, or average value of the plurality of distances from the target vertex to a plurality of triangular facets is calculated to obtain the final distance information for the target vertex. This final distance information is then used as the adaptation degree information for the target vertex.

In practical applications, the adaptation degree range information that satisfies the adaptation requirements for each target vertex can be flexibly set. If the adaptation degree information of a target vertex falls within its corresponding adaptation degree range, that target vertex meets the adaptation requirements. Conversely, if the adaptation degree information of a target vertex does not fall within its corresponding adaptation degree range, that target vertex does not meet the adaptation requirements. After determining whether each target vertex meets its respective adaptation requirements, the adaptation degree between the target 3D model and the product 3D model is determined based on the extent to which the target vertices meet their respective adaptation requirements.

Further optionally, manual intervention can be introduced to determine the adaptation degree between the target 3D model and the product 3D model. To allow the user to intuitively understand the adaptation degree between the target 3D model and the product 3D model, the target 3D model of the fitting subject, the product 3D model, or any of the fused 3D models can be displayed. Additionally, the adaptation degree information of a plurality of target vertices can be visually marked on any of the 3D models, where different visualization states correspond to adaptation degree information that differs in relation to the reference adaptation range, allowing the user to confirm the adaptation degree between the target 3D model and the product 3D model.

Specifically, the adaptation degree information of a plurality of target vertices can be visually marked on any of the above-mentioned 3D models. In this way, different adaptation degree information is represented using different visualization states. For example, vertices that meet the adaptation requirements are marked in green, while vertices that do not meet the adaptation requirements are marked in red.

The reference adaptation degree range refers to the numerical range that determines whether the adaptation degree meets the requirements. Adaptation degree information within the reference adaptation degree range meets the adaptation requirements, while adaptation degree information outside the reference range does not. The greater the number of adaptation degree information points that do not meet the requirements, the lower the adaptation degree between the target 3D model and the product 3D model. Conversely, the greater the number of adaptation degree information points that meet the requirements, the higher the adaptation degree between the target 3D model and the product 3D model.

Further optionally, to more visually and intuitively reflect the distribution of adaptation degree information for each target vertex on the target 3D model of the fitting subject, when visually marking the adaptation degree information of a plurality of target vertices on any of the above-mentioned 3D models, the 3D model can be rendered based on the adaptation degree information of a plurality of target vertices to generate an adaptation degree heatmap. In the heatmap, different colors represent adaptation degree information with different relationships to the reference adaptation degree range. It should be noted that there can be a plurality of reference adaptation degree ranges. For example, different reference adaptation degree ranges can be set for different parts of the fitting subject. Taking the foot as an example, the heel region corresponds to a first reference adaptation degree range, such as 1-2 cm, the sole region corresponds to a second reference adaptation degree range, such as 0.5-1 cm, and the ankle region corresponds to a third reference adaptation degree range, such as 0-1 cm, and so on. For adaptation degree information, values within the reference adaptation degree range are marked with a first color, values greater than the upper limit of the reference range are marked with a second color, and values less than the lower limit of the reference range are marked with a third color. This allows users to identify suitable areas by looking at the first color, areas that are too loose by looking at the second color, and areas that are too tight by looking at the third color.

After displaying any 3D model with visualized adaptation degree information to the user, the user can subjectively confirm the adaptation degree between the target 3D model and the product 3D model based on the visualization state of the model. Taking the adaptation degree heatmap as an example, if the user observes that there are many regions marked with colors indicating that the adaptation degree does not meet the requirements (e.g., red), they can conclude that the adaptation degree between the product 3D model and the target 3D model of the fitting subject is low. If the user observes that there are few regions marked with colors indicating non-compliance (e.g., red), they can conclude that the adaptation degree between the product 3D model and the target 3D model of the fitting subject is high. If the user observes a moderate number of regions marked with colors indicating non-compliance (e.g., red), they can conclude that the adaptation degree between the product 3D model and the target 3D model of the fitting subject is average.

After obtaining the adaptability between the three-dimensional model of each candidate product and the target three-dimensional model, the product information corresponding to the highest adaptability with the target three-dimensional model can be selected as the target product information.

Furthermore, in the above customization scenario, based on the model parameters corresponding to the target three-dimensional model and the selected product type, the implementation method for customizing a product three-dimensional model adapted to the target three-dimensional model for the fitting subject includes: obtaining a reference three-dimensional model corresponding to the selected product type, and merging the target three-dimensional model of the fitting subject with the reference three-dimensional model to obtain a fused three-dimensional model. The fused three-dimensional model represents the first relative positional relationship between the target three-dimensional model of the fitting subject and the reference three-dimensional model in the fitting state. Based on the first relative positional relationship, a plurality of distance information values between several target vertices on the target three-dimensional model and the corresponding vertices or regions on the reference three-dimensional model are obtained as adaptation information for the plurality of target vertices. In cases where the adaptation information of the plurality of target vertices indicates that the reference three-dimensional model does not meet the adaptation requirements, the dimensional parameters and/or shape parameters of the reference three-dimensional model are adjusted, and the adaptation information of the plurality of target vertices is re-obtained until a final product three-dimensional model meeting the adaptation requirements is achieved. The process for obtaining adaptation information can refer to the previously described embodiments, and is not repeated here.

It is worth noting that after each adjustment of the dimensional parameters and/or shape parameters of the reference three-dimensional model, the adjusted reference three-dimensional model is used as the new reference three-dimensional model. The process of obtaining the adaptation information of a plurality of target vertices is repeated until the adaptation information of the plurality of target vertices indicates that the reference three-dimensional model meets the adaptation requirements. The reference three-dimensional model that meets the adaptation requirements is then designated as the final product three-dimensional model.

The dimensional parameters of the reference three-dimensional model include, but are not limited to, the length, width, and height of the entire reference three-dimensional model, or the length, width, and height of various parts of the reference three-dimensional model. Taking shoes as an example, the dimensional parameters include shoe length, shoe width, toe length or width, or the height of the instep, among others. The shape parameters of the reference three-dimensional model define the shape characteristics of the reference three-dimensional model. Taking shoes as an example, the shape parameters may include the height of the heel, the width and length of the toe area, or the height of the instep, among others.

In this embodiment, the dimensional parameters and/or shape parameters of the reference three-dimensional model can be adjusted automatically or in response to user-triggered adjustment operations on the reference three-dimensional model. No limitations are imposed on this aspect.

Further optionally, to facilitate user-initiated adjustment operations, adjustment controls can be provided to the user, allowing the user to initiate adjustment operations on the reference three-dimensional model through these controls. Specifically, adjustment controls, such as but not limited to sliders, can be displayed in the associated area of any of the aforementioned three-dimensional models. Based on this, in response to at least one sliding operation on the slider, the sliding distance and sliding direction of each operation are obtained, and the adjustment magnitude and adjustment direction are determined accordingly. The dimensional parameters and/or shape parameters of the reference three-dimensional model are then adjusted based on the adjustment direction and adjustment magnitude. In this embodiment, the sliding distance determines the adjustment magnitude of the dimensional parameters and/or shape parameters, while the sliding direction determines the adjustment direction of the dimensional parameters and/or shape parameters. The adjustment direction can either increase or decrease the parameters based on the current value, with no limitations imposed on this aspect. Notably, any region within the display area of the three-dimensional model can be designated as an associated area, and sliders can be displayed within this associated area to facilitate user adjustment operations.

In an optional embodiment, the sliding distance is proportional to the adjustment magnitude-the greater the sliding distance, the larger the adjustment magnitude of the dimensional parameters and/or shape parameters; conversely, the smaller the sliding distance, the smaller the adjustment magnitude of the dimensional parameters and/or shape parameters. Correspondingly, taking a slider moving from left to right as an example, sliding to the left represents a backward adjustment, which means reducing the dimensional parameters and/or shape parameters, i.e., the adjustment direction is towards a smaller value. Sliding to the right represents a forward adjustment, which means increasing the dimensional parameters and/or shape parameters, i.e., the adjustment direction is towards a larger value.

In practical applications, a single slider can be used to adjust both the dimensional parameters and the shape parameters of the reference three-dimensional model simultaneously. However, considering that in some cases there may only be a need to adjust the dimensional parameters or the shape parameters independently, the slider may include a first slider and a second slider. The first slider is used to adjust the dimensional parameters of the reference three-dimensional model, while the second slider is used to adjust the shape parameters of the reference three-dimensional model. Users can independently adjust the dimensional parameters and shape parameters of the reference three-dimensional model using the first slider and the second slider, respectively.

In this embodiment, after obtaining the final product three-dimensional model, the final product three-dimensional model can be sent to the server. The server can then identify a target product object whose size and shape match the fitting subject and return information about the target product object (i.e., the target product information) to the terminal device. The target product object information may include, but is not limited to, details such as the material, style, design, production progress, logistics delivery progress, production date, and manufacturer of the target product object. Further optionally, the terminal device can output the target product object information to the user, allowing the user to decide whether to proceed with customization of the target product object based on this information. In response to the user's confirmation to proceed with customization, the terminal device can send a customization instruction to the server. Based on this, the server can transmit the target three-dimensional model to a customization platform. The customization platform can then produce the target product object based on the target three-dimensional model, ensuring the size and shape match the fitting subject. The produced target product object can then be delivered to the user via logistics.

The detailed implementation process for executing each step in the embodiment shown in FIG. 7 can refer to the relevant descriptions in the aforementioned method embodiments, which will not be repeated here.

The technical solution provided in this application creates an initial three-dimensional model of the fitting subject using the three-dimensional model description information corresponding to the fitting subject. It further utilizes a plurality of images of the fitting subject to perform three-dimensional reconstruction. During the reconstruction process, feature vectors are extracted from each of the images, and these feature vectors are concatenated. Based on the concatenated feature vectors, pose control parameters and shape control parameters for model control are predicted. The initial three-dimensional model of the fitting subject is then subjected to masking based on the pose control parameters and shape control parameters to obtain the target three-dimensional model of the fitting subject. This method of three-dimensional reconstruction significantly enhances the accuracy of the three-dimensional model. The higher the accuracy of the three-dimensional model, the greater its realism, making it better able to represent the fitting subject in the real world. This, in turn, effectively expands the application scope of three-dimensional models and improves their effectiveness. In particular, in the context of product selection and purchase, the three-dimensional reconstructed model can be used to select products that match the fitting subject. This provides a basis for addressing existing issues related to product returns and exchanges.

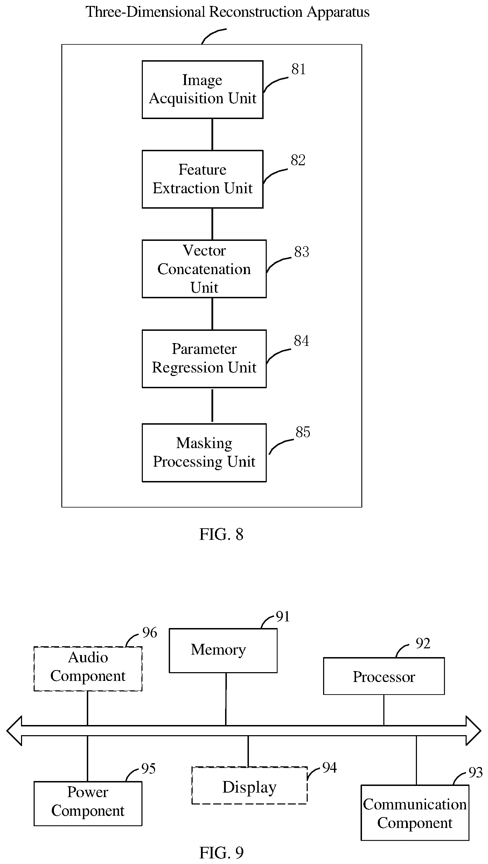

**FIG. 8** is a schematic diagram of the structure of a three-dimensional reconstruction device provided in an embodiment of the present disclosure. Referencing FIG. 8, the device may include the following units:
image acquisition unit 81 is configured to acquire a plurality of frames of images of the target object, as well as the three-dimensional model description information corresponding to the target object;
feature extraction unit 82 is configured to input a plurality of frames of images into a feature extraction network to extract features, thereby obtaining the feature vectors of the plurality of frames of images;
vector concatenation unit 83 is configured to concatenate the feature vectors of the plurality of frames of images to obtain the target concatenated feature vector;
parameter regression unit 84 is configured to input the target concatenated feature vector into a parameter regression network to predict a plurality of control parameters for model control based on the number of parameters. The plurality of control parameters include pose control parameters and shape control parameters;
masking processing unit 85 is configured to apply a masking operation to the initial three-dimensional model of the target object based on the pose control parameters and shape control parameters, thereby obtaining the target three-dimensional model of the target object. The initial three-dimensional model is derived from the three-dimensional model description information.

Further optionally, when the feature extraction unit 82 inputs a plurality of frames of images into the feature extraction network for feature extraction to obtain the feature vectors of the plurality of frames of images, it is specifically configured to: for each frame of the plurality of frames of images, input the frame into the feature extraction module within the feature extraction network to perform feature extraction, thereby obtaining the image feature map of the frame; input the camera pose data captured during the acquisition of the frame into the camera parameter fusion module within the feature extraction network for feature extraction, thereby obtaining the camera pose feature map of the frame; use the feature concatenation module within the feature extraction network to concatenate the image feature map and the camera pose feature map of each frame, thereby obtaining the concatenated feature map for each frame; apply the feature dimensionality reduction module within the feature extraction network to perform dimensionality reduction on the concatenated feature map of each frame, thereby obtaining the feature vector for each frame of the image.

Further optionally, when the feature extraction unit 82 processes each frame of the plurality of frames of images by inputting the frame into the feature extraction module within the feature extraction network to extract the image feature map of the frame, it is specifically configured to: for each frame of the plurality of frames of images, input the frame into the skip connection layer within the feature extraction module. This performs multi-resolution feature map extraction and skip connections for feature maps of the same resolution, thereby obtaining the second intermediate feature map of the frame; input the second intermediate feature map of the frame into the downsampling layer within the feature extraction module for M downsampling operations, thereby obtaining the image feature map of the frame, where M is a positive integer equal to or greater than 1.

Further optionally, if the skip connection layer adopts an encoder-decoder structure, when the feature extraction unit 82 inputs the frame image into the skip connection layer within the feature extraction module to perform multi-resolution feature map extraction and skip connections for feature maps of the same resolution, thereby obtaining the second intermediate feature map, it is specifically configured to: input the frame image into the encoder of the skip connection layer, where the frame image is encoded to generate the initial feature map of the frame. Subsequently, perform N downsampling operations on the initial feature map sequentially to obtain the first intermediate feature map; input the first intermediate feature map into the decoder of the skip connection layer; perform N upsampling operations sequentially on the first intermediate feature map. During each upsampling operation, perform skip connections with the first intermediate feature map of the same resolution obtained from the downsampling operations in the encoder. This process results in the second intermediate feature map of the frame image. Here, N represents the number of sampling layers and is a positive integer.

Further optionally, if the encoder includes an encoding sub-module and N downsampling sub-modules connected sequentially, when the feature extraction unit 82 inputs the frame image into the encoder of the skip connection layer to encode the frame image and obtain the initial feature map of the frame, and subsequently performs N downsampling operations on the initial feature map to obtain the first intermediate feature map, it is specifically configured to: input the frame image into the encoding sub-module for encoding, thereby obtaining the initial feature map of the frame image; use N downsampling sub-modules to perform N downsampling operations on the initial feature map sequentially, thereby obtaining the first intermediate feature map. In each downsampling sub-module: perform convolution operations on its input using K₁ convolution units connected sequentially, with each unit utilizing its respective target convolution parameters to generate an intermediate feature map to be activated; apply an activation function to the intermediate feature map to generate the output of each convolution unit, K₁ is a positive integer greater than or equal to 2.

Further optionally, if the downsampling layer includes M downsampling sub-modules connected sequentially, when the feature extraction unit 82 inputs the second intermediate feature map of the frame image into the downsampling layer within the feature extraction module to perform M downsampling operations, thereby obtaining the image feature map of the frame image, it is specifically configured to: use M downsampling sub-modules to perform M downsampling operations on the second intermediate feature map, thereby obtaining the image feature map of the frame image. In each downsampling sub-module: perform convolution operations on its input using K₂ convolution units connected sequentially, with each unit utilizing its respective target convolution parameters to generate an intermediate feature map to be activated; apply an activation function to the intermediate feature map to produce the output of each convolution unit, K₂ is a positive integer greater than or equal to 2.

Further optionally, when the feature extraction unit 82 inputs the camera pose data captured at the time of obtaining the frame image into the camera parameter fusion module within the feature extraction network for feature extraction to obtain the camera pose feature map of the frame image, it is specifically configured to: input the camera pose data captured at the time of obtaining the frame image into the camera parameter fusion module within the feature extraction network, the camera pose data including at least two types of pose angles;
based on at least two types of pose angles and the relationships between these pose angles, trigonometric processing is performed to generate a plurality of pose representation parameters, these pose representation parameters then being processed using a multi-layer perceptron (MLP) network within the camera parameter fusion module to obtain the camera pose feature map of the frame image.

Further optionally, when the feature extraction unit 82 performs trigonometric processing based on at least two types of pose angles and the relationships between these pose angles to generate a plurality of pose representation parameters, it is specifically configured to: perform numerical calculations on all pairs of pose angles among the at least two pose angles to obtain a plurality of fused pose angles, where each fused pose angle represents the relationship between a specific pair of pose angles; perform trigonometric processing on each pose angle among the at least two pose angles, as well as on each fused pose angle among the plurality of fused pose angles, to generate a plurality of pose representation parameters.

Further optionally, when the feature extraction unit (82) uses a multi-layer perceptron (MLP) network to process a plurality of pose representation parameters to obtain the camera pose feature map of the frame image, it is specifically configured to: perform vectorization on the plurality of pose representation parameters to generate a camera pose feature vector; process the camera pose feature vector using the multi-layer perceptron (MLP) network to generate the camera pose feature map.

Further optionally, when the parameter regression unit 84 inputs the target concatenated feature vector into the parameter regression network to predict a plurality of control parameters for model control based on the three-dimensional model description information, it is specifically configured to:
input the target concatenated feature vector into the parameter regression network; perform at least one multi-layer perceptron (MLP) operation on the target concatenated feature vector based on the three-dimensional model description information to generate a plurality of control parameters for model control.

The plurality of frames of images include a current frame image and at least one historical frame image;
when the feature extraction unit 82 inputs a plurality of frames of images into the feature extraction network for feature extraction to obtain the feature vectors of the plurality of frames of images, it is specifically configured to: extract features from the current frame image by inputting the current frame image into the feature extraction network to obtain the feature vector of the current frame image;
when the vector concatenation unit 83 concatenates the feature vectors of the plurality of frames of images to generate the target concatenated feature vector, it is specifically configured to: use a predefined sliding window to retrieve the feature vectors of at least one historical frame image from a designated storage space; concatenate the feature vector of the current frame image with the feature vectors of the at least one historical frame image to generate the target concatenated feature vector.

Further optionally, when the feature extraction unit 82 extracts the feature vector of the current frame image by inputting the current frame image into the feature extraction network, it is specifically configured to: detect the image position of the target object within the current frame image; crop the local image containing the target object from the current frame image based on the detected image position; input the cropped local image into the feature extraction network for feature extraction to obtain the feature vector of the current frame image.

Further optionally, when the feature extraction unit 82 detects the image position of the target object in the current frame image, it is specifically configured to: perform preprocessing on the current frame image sequentially. The preprocessing includes at least one of image scaling and normalization; input the preprocessed image into a target detection network to perform target detection, thereby obtaining the image position of the target object within the preprocessed image.

Further optionally, the three-dimensional reconstruction device further includes an adaptation unit and/or a labeling unit.

Adaptation unit is configured to adapt the target three-dimensional model to the target object in each frame of the plurality of frames of images based on the camera pose data collected when capturing that frame, based on the adaptation results, assist in selecting products that are compatible with the target object; and/or
labeling unit is configured to input any frame image from the plurality of frames of images into a depth estimation network to estimate the size information of the target object, and annotate the target three-dimensional model based on the estimated size information of the target object; and/or
adaptation unit is configured to adapt the target three-dimensional model to the target object in each frame of the plurality of frames of images based on the camera pose data collected when capturing that frame, and measure the shape parameters of the target object based on the adaptation results.

Further optionally, the target object can be a foot, hand, head, elbow, or leg on a human body, and the three-dimensional model description information corresponding to the target object is determined based on the SMPL (Skinned Multi-Person Linear) model.

The device shown in FIG. 8 can execute the method of the embodiment shown in FIG. 2. Its implementation principles and technical effects are not further elaborated here. The specific operations performed by each unit in the device mentioned above have been described in detail in the related method embodiments, and therefore, no additional explanations will be provided here.

It should be noted that the execution entities of the steps provided in the above method embodiments can either be the same device or different devices. For example, steps 201 to 204 can be executed by device A; alternatively, steps 201 and 202 can be executed by device A, while steps 203 and 204 can be executed by device B; and so on.

Additionally, in some of the processes described in the above embodiments and figures, a plurality of operations is presented in a specific order. However, it should be understood that these operations do not necessarily have to be executed in the order presented herein or can be executed in parallel. The step numbers, such as 201 and 202, are merely used to distinguish different operations and do not represent any specific execution order. Furthermore, these processes may include more or fewer operations, and these operations can be executed sequentially or in parallel. It should also be noted that the terms "first," "second," and so on, used herein are for the purpose of distinguishing different messages, devices, modules, etc., and do not indicate a temporal or sequential order, nor do they imply that "first" and "second" are of different types.

FIG. 9 is a schematic diagram of the structure of a computer device provided in the embodiment of this application. As shown in FIG. 9, the computer device includes: memory 91 and processor 92.

Memory 91 is used to store computer programs and can be configured to store various other types of data to support operations on the computing platform. Examples of such data include, but are not limited to, instructions for any applications or methods running on the computing platform, contact data, phone book data, messages, pictures, videos, and so on.

Memory 91 can be implemented using any type of volatile or non-volatile storage device, or a combination of both. Examples include static random-access memory (SRAM), electrically erasable programmable read-only memory (EEPROM), erasable programmable read-only memory (EPROM), programmable read-only memory (PROM), read-only memory (ROM), magnetic storage, flash memory, magnetic disks, or optical disks.

The processor 92, coupled with the memory 91, is configured to execute the computer programs stored in the memory 91 to perform the following: obtain a plurality of frames of images that include the target object, as well as the three-dimensional model description information corresponding to the target object; input the plurality of frames of images into a feature extraction network for feature extraction to obtain feature vectors for the plurality of frames of images; concatenate the feature vectors of the plurality of frames of images to generate a target concatenated feature vector; input the target concatenated feature vector into a parameter regression network to predict a plurality of control parameters for model control based on the three-dimensional model description information. These control parameters include pose control parameters and shape control parameters; perform masking on the initial three-dimensional model of the target object based on the pose control parameters and shape control parameters to generate the target three-dimensional model of the target object. The initial three-dimensional model is derived from the three-dimensional model description information.

Further optionally, the processor 92, when executing the computer programs stored in the memory 91, can also be configured to: obtain a plurality of frames of images that include the fitting subject, as well as the three-dimensional model description information corresponding to the fitting subject; input the plurality of frames of images into a feature extraction network for feature extraction to obtain feature vectors for the plurality of frames of images; concatenate the feature vectors of the plurality of frames of images to generate a target concatenated feature vector; input the target concatenated feature vector into a parameter regression network to predict a plurality of control parameters for model control based on the three-dimensional model description information. These control parameters include pose control parameters and shape control parameters; perform masking on the initial three-dimensional model of the fitting subject based on the pose control parameters and shape control parameters to generate the target three-dimensional model of the fitting subject. The initial three-dimensional model is derived from the three-dimensional model description information; provide target product information that is compatible with the fitting subject based on the target three-dimensional model.

Furthermore, as shown in FIG. 9, the computer device also includes: a communication component 93, a display 94, a power component 95, an audio component 96, and other components. The components shown in FIG. 9 are provided as illustrative examples and do not imply that the computer device only includes the components shown in the figure. Additionally, the components within the dashed box in FIG. 9 are optional and not mandatory. The inclusion of these components depends on the product form of the computer device. The computer device in this embodiment can be implemented as a terminal device such as a desktop computer, a laptop, a smartphone, or an IoT device. Alternatively, it can be implemented as a server-side device such as a conventional server, a cloud server, or a server array. If the computer device in this embodiment is implemented as a terminal device (e.g., a desktop computer, laptop, or smartphone), it may include the components within the dashed box in FIG. 9. If the computer device is implemented as a server-side device (e.g., a conventional server, cloud server, or server array), it may exclude the components within the dashed box in FIG. 9.

For detailed implementation processes regarding the actions performed by the processor, please refer to the related descriptions in the aforementioned method embodiments or device embodiments. These details are not repeated here.

Accordingly, an embodiment of the present disclosure also provides a computer-readable storage medium storing a computer program, which, when executed, is capable of implementing the steps in the above-described method embodiments that can be executed by the computer device.

Accordingly, an embodiment of the present disclosure also provides a computer program product, which includes a computer program/instructions. When the computer program/instructions are executed by a processor, they enable the processor to implement the steps in the above-described method embodiments that can be executed by the computer device.

The communication component is configured to facilitate wired or wireless communication between the device it resides in and other devices. The device with the communication component can access wireless networks based on communication standards, such as WiFi, 2G, 3G, 4G/LTE, 5G mobile communication networks, or combinations thereof. In an exemplary embodiment, the communication component receives broadcast signals or broadcastrelated information from an external broadcast management system via a broadcast channel. In another exemplary embodiment, the communication component also includes a near-field communication (NFC) module to enable short-range communication. For example, the NFC module can be implemented using technologies such as radio-frequency identification (RFID), infrared data association (IrDA), ultra-wideband (UWB), Bluetooth (BT), and other technologies.

The display includes a screen, which can comprise a liquid crystal display (LCD) and a touch panel (TP). If the screen includes a touch panel, it can function as a touch screen to receive input signals from the user. The touch panel includes one or more touch sensors to sense touches, swipes, and gestures on the touch panel. The touch sensors can not only detect the boundaries of touch or swipe actions but also determine the duration and pressure associated with the touch or swipe operations.

The power component supplies power to various components of the device it resides in. The power component may include a power management system, one or more power sources, and other components associated with generating, managing, and distributing power within the device.

The audio component can be configured to output and/or input audio signals. For example, the audio component includes a microphone (MIC), which is configured to receive external audio signals when the device containing the audio component is in an operational mode, such as call mode, recording mode, or voice recognition mode. The received audio signals can be further stored in the memory or transmitted via the communication component. In some embodiments, the audio component also includes a speaker, which is used to output audio signals.

Those skilled in the art will understand that the embodiments of this application can be provided as a method, a system, or a computer program product. Therefore, this application can take the form of a purely hardware implementation, a purely software implementation, or an implementation combining software and hardware aspects. Moreover, this application can be implemented as a computer program product stored on one or more computer-readable storage media containing computer-usable program code. These storage media include, but are not limited to, magnetic disk storage, CD-ROMs, optical storage, and other forms of storage media.

This application is described with reference to flowcharts and/or block diagrams of methods, devices (systems), and computer program products according to the embodiments of this application. It should be understood that each step and/or block in the flowcharts and/or block diagrams, as well as combinations of steps and/or blocks in the flowcharts and/or block diagrams, can be implemented using computer program instructions. These computer program instructions can be provided to a processor of a general-purpose computer, a special-purpose computer, an embedded processor, or other programmable data processing devices to produce a machine. When executed by the processor of the computer or other programmable data processing device, these instructions create means for performing the functions specified in one or more steps of the flowchart or one or more blocks of the block diagram.

These computer program instructions can also be stored in a computer-readable memory that can direct a computer or other programmable data processing device to operate in a specific manner. The instructions stored in the computer-readable memory produce an article of manufacture that includes instruction means for implementing the functions specified in one or more steps of the flowchart and/or one or more blocks of the block diagram.

These computer program instructions can also be loaded onto a computer or other programmable data processing device, such that a series of operational steps are executed on the computer or other programmable device to produce a computer-implemented process. In this way, the instructions executed on the computer or other programmable device provide steps for implementing the functions specified in one or more steps of the flowchart and/or one or more blocks of the block diagram.

In a typical configuration, the computing device includes one or more processors (CPU), input/output interfaces, network interfaces, and memory.

The memory may include non-persistent storage in the form of computer-readable media, such as random-access memory (RAM), and/or non-volatile memory, such as read-only memory (ROM) or flash memory (flash RAM). The memory is an example of a computer-readable medium.

A computer-readable medium includes both persistent and non-persistent, removable and non-removable media that can store information by any method or technology. The information may include computer-readable instructions, data structures, program modules, or other data. Examples of computer storage media include, but are not limited to, phase-change memory (PRAM), static random-access memory (SRAM), dynamic random-access memory (DRAM), other types of random-access memory (RAM), read-only memory (ROM), electrically erasable programmable read-only memory (EEPROM), flash memory or other memory technologies, compact disc read-only memory (CD-ROM), digital versatile discs (DVD) or other optical storage, magnetic cassettes, magnetic tape, magnetic disk storage, or other magnetic storage devices, or any other non-transitory medium that can be used to store information accessible by a computing device. As defined herein, a computer-readable medium does not include transitory computer-readable media, such as modulated data signals or carrier waves.

It should also be noted that the terms "include," "comprise," or any variations thereof are intended to encompass non-exclusive inclusion. Thus, a process, method, product, or device that includes a series of elements not only includes those elements but may also include other elements that are not explicitly listed, or elements inherent to such a process, method, product, or device. Without additional restrictions, an element defined by the phrase "including a..." does not exclude the presence of additional identical elements in the process, method, product, or device that includes the element.

The above is merely an embodiment of this application and is not intended to limit the scope of the application. For those skilled in the art, various modifications and changes can be made to this application. Any modifications, equivalent replacements, improvements, etc., made within the spirit and principles of this application should be included within the scope of the claims of this application.

## Claims

1. A method for three-dimensional reconstruction, comprising:
obtaining a plurality of frames of images containing a target object, and three-dimensional model description information of the target object;
inputting the plurality of frames of images into a feature extraction network to extract features, to obtain feature vectors of the plurality of frames of images, and concatenating the feature vectors of the plurality of frames of images to generate a target concatenated feature vector;
inputting the target concatenated feature vector into a parameter regression network, and predicting, based on the three-dimensional model description information, a plurality of control parameters for model control, wherein the plurality of control parameters include pose control parameters and shape control parameters; and
applying a masking operation to an initial three-dimensional model of the target object based on the pose control parameters and the shape control parameters to generate a target three-dimensional model of the target object, wherein the initial three-dimensional model is obtained based on the three-dimensional model description information.

2. The method according to claim 1, wherein inputting the plurality of frames of images into the feature extraction network to extract features, to obtain feature vectors of the plurality of frames of images, comprises:
for each frame of the plurality of frames of images, inputting the frame into a feature extraction module of the feature extraction network to perform feature extraction and obtain an image feature map for the frame;
inputting camera pose data at a time the frame was captured into a camera parameter fusion module of the feature extraction network to perform feature extraction and obtain a camera pose feature map for the frame;
concatenating the image feature map and the camera pose feature map of each frame using a feature concatenation module of the feature extraction network to obtain a concatenated feature map for each frame; and
performing dimensionality reduction on the concatenated feature map of each frame using a dimensionality reduction module of the feature extraction network to obtain a feature vector for each frame.

3. The method according to claim 2, wherein for each frame of the plurality of frames of images, inputting the frame into the feature extraction module of the feature extraction network to perform feature extraction and obtain an image feature map for the frame, comprises:
for each frame of the plurality of frames of images, inputting the frame into a skip connection layer of the feature extraction module to perform multi-resolution feature map extractions and skip connections of feature maps with the same resolution, to obtain a second intermediate feature map for the frame; and
inputting the second intermediate feature map of the frame into a downsampling layer of the feature extraction module to perform M downsampling operations, where M is a positive integer greater than or equal to 1, to obtain the image feature map for the frame.

4. The method according to claim 3, wherein the skip connection layer adopts an encoder-decoder structure, and inputting the frame into the skip connection layer of the feature extraction module to perform multi-resolution feature map extractions and skip connections of feature maps with the same resolution to obtain a second intermediate feature map for the frame, comprises:
inputting the frame into the encoder of the skip connection layer to encode the frame and obtain an initial feature map for the frame, and sequentially performing N downsampling operations on the initial feature map to obtain a first intermediate feature map, where N is a positive integer; and
inputting the first intermediate feature map into the decoder of the skip connection layer, sequentially performing N upsampling operations on the first intermediate feature map, and, during each upsampling operation, performing a skip connection with the feature map of the same resolution obtained through the downsampling operations in the encoder, to obtain the second intermediate feature map for the frame.

5. The method according to claim 4, wherein the encoder comprises an encoding submodule and N downsampling submodules connected in sequence, and inputting the frame into the encoder of the skip connection layer to encode the frame to obtain an initial feature map for the frame, and sequentially performing N downsampling operations on the initial feature map to obtain a first intermediate feature map, comprises:
inputting the frame into the encoding submodule to perform encoding and obtain the initial feature map for the frame;
performing N downsampling operations on the initial feature map using the N downsampling submodules to obtain the first intermediate feature map;
wherein, in each downsampling submodule:
performing convolution operations on the input using K₁ convolution units, each corresponding to a target convolution parameter, to generate an intermediate feature map to be activated, where K₁ is a positive integer greater than or equal to 2; and
activating the intermediate feature map to be activated using an activation function to generate an output of each convolution unit.

6. The method according to claim 3, wherein the downsampling layer comprises M downsampling submodules connected in sequence, and inputting the second intermediate feature map of the frame into the downsampling layer of the feature extraction module to perform M downsampling operations to obtain the image feature map for the frame, comprises:
performing M downsampling operations on the second intermediate feature map using the M downsampling submodules to obtain the image feature map for the frame;
wherein, in each downsampling submodule, performing convolution operations on the input using K2 convolution units connected in sequence, each corresponding to a target convolution parameter, to generate an intermediate feature map to be activated, where K2 is a positive integer greater than or equal to 2; and activating the intermediate feature map to be activated using an activation function to generate the output of each convolution unit.

7. The method according to claim 2, wherein inputting camera pose data at a time the frame was captured into the camera parameter fusion module of the feature extraction network to perform feature extraction and obtain a camera pose feature map for the frame, comprises:
inputting the camera pose data at a time the frame was captured into the camera parameter fusion module of the feature extraction network, wherein the camera pose data includes at least two types of pose angles;
performing trigonometric processing based on at least two pose angles of the at least two types of pose angles and relationships between the at least two pose angles to obtain a plurality of pose representation parameters; and
processing the plurality of pose representation parameters using a multilayer perceptron (MLP) network in the camera parameter fusion module to obtain the camera pose feature map for the frame.

8. The method according to claim 7, wherein performing trigonometric processing based on the at least two pose angles of the at least two types of pose angles and the relationships between the at least two pose angles to obtain a plurality of pose representation parameters, comprises:
performing numerical calculations on pairs of the at least two pose angles to obtain a plurality of fused pose angles, each fused pose angle representing a relationship between a corresponding pair of pose angles; and
performing trigonometric processing on each of the at least two pose angles and each of the plurality of fused pose angles to obtain a plurality of pose representation parameters.

9. The method according to claim 7, wherein processing the plurality of pose representation parameters using a multilayer perceptron (MLP) network in the camera parameter fusion module to obtain the camera pose feature map for the frame, comprises:
vectorizing the plurality of pose representation parameters to obtain a camera pose feature vector; and
processing the camera pose feature vector using the multilayer perceptron (MLP) network to obtain the camera pose feature map.

10. The method according to claim 1, wherein inputting the target concatenated feature vector into the parameter regression network to predict a plurality of control parameters for model control based on a number of parameters, comprises:
inputting the target concatenated feature vector into the parameter regression network; and performing at least one multilayer perceptron (MLP) operation on the target concatenated feature vector based on the number of parameters to obtain a plurality of control parameters for model control.

11. The method according to any one of claims 1 to 10, wherein the plurality of frames of images include a current frame image and at least one historical frame image;
inputting the plurality of frames of images into the feature extraction network to extract features to obtain feature vectors of the plurality of frames of images, comprises: each time, inputting a current frame image into the feature extraction network to extract features and obtain a feature vector for the current frame image; and
concatenating the feature vectors of the plurality of frames of images to obtain a target concatenated feature vector, comprises: using a predetermined sliding window to retrieve a feature vector of at least one historical frame image from a specified storage space; and concatenating the feature vector of the current frame image and the feature vector of at least one historical frame image to obtain the target concatenated feature vector.

12. The method according to any one of claims 1 to 10, wherein after obtaining the target three-dimensional model, the method further comprises:
for each frame of the plurality of frames of images, adapting the target three-dimensional model to the target object in the frame based on the camera pose data recorded at the time the frame was captured, and selecting a product compatible with the target object based on an adaptation result; and/or
inputting any frame of the plurality of frames of images into a depth estimation network to estimate size information of the target object, and annotating the target three-dimensional model based on the estimated size information of the target object; and/or
for each frame of the plurality of frames of images, adapting the target three-dimensional model to the target object in the frame based on the camera pose data recorded at the time the frame was captured, and measuring shape parameters of the target object based on the adaptation result.

13. The method according to any one of claims 1 to 10, wherein the target object is a foot object, hand object, head object, elbow object, or leg object on a human body, and the three-dimensional model description information corresponding to the target object is determined based on an SMPL model.

14. A method for processing product information, comprising:
obtaining a plurality of frames of images containing a fitting subject, and three-dimensional model description information corresponding to the fitting subject;
inputting the plurality of frames of images into a feature extraction network to extract features, to obtain feature vectors of the plurality of frames of images, and concatenating the feature vectors of the plurality of frames of images to generate a target concatenated feature vector;
inputting the target concatenated feature vector into a parameter regression network, to predict, based on the three-dimensional model description information, a plurality of control parameters for model control, wherein the plurality of control parameters include pose control parameters and shape control parameters;
applying a masking operation to an initial three-dimensional model of the fitting subject based on the pose control parameters and shape control parameters to generate a target three-dimensional model of the fitting subject, wherein the initial three-dimensional model is generated based on the three-dimensional model description information; and
providing target product information compatible with the fitting subject based on the target three-dimensional model.

15. The method according to claim 14, wherein providing target product information compatible with the fitting subject based on the target three-dimensional model comprises:
selecting, from a plurality of candidate product information items, the product information whose product three-dimensional model has the highest compatibility with the target three-dimensional model, based on the target three-dimensional model and the product three-dimensional models corresponding to the plurality of candidate product information items, and providing a selected target product information to the fitting subject;
or
customizing a product three-dimensional model compatible with the target three-dimensional model for the fitting subject based on model parameters corresponding to the target three-dimensional model and a selected product type, and providing the product information corresponding to the customized product three-dimensional model as the target product information to the fitting subject.

16. A three-dimensional reconstruction device, comprising:
an image acquisition unit, configured to acquire a plurality of frames of images of a target object and three-dimensional model description information corresponding to the target object;
a feature extraction unit, configured to input the plurality of frames of images into a feature extraction network to extract features and obtain feature vectors of the plurality of frames of images;
a vector concatenation unit, configured to concatenate the feature vectors of the plurality of frames of images to obtain a target concatenated feature vector;
a parameter regression unit, configured to input the target concatenated feature vector into a parameter regression network, and predict, based on a number of parameters, a plurality of control parameters for model control, wherein the plurality of control parameters include pose control parameters and shape control parameters; and
a masking processing unit, configured to apply a masking operation on an initial three-dimensional model of the target object based on the pose control parameters and shape control parameters to generate a target three-dimensional model of the target object, wherein the initial three-dimensional model is obtained based on the three-dimensional model description information.

17. A computing device, comprising:
a memory, configured to store a computer program; and
a processor, coupled to the memory, configured to execute the computer program to implement the steps of any one of the methods described in claims 1 to 13 and claims 14 to 15.

18. A computer-readable storage medium storing a computer program, wherein, when the computer program is executed by a processor, it causes the processor to perform the steps of any one of the methods described in claims 1 to 13 and claims 14 to 15.
